# EUROPEAN PATENT APPLICATION

(11) **EP 4 557 441 A1**
(43) Date of publication of application: **21.05.2025**
(21) Application number: 23886173.6
(22) Date of filing: 30.10.2023
(51) Int. Cl.: H01M 10/0585, H01M 4/66, H01M 10/052

(54) **LITHIUM SECONDARY BATTERY STRUCTURE COMPRISING COMPOSITE CONDUCTIVE CURRENT COLLECTOR**

(30) Priority: 04.11.2022 KR 20220146128
(71) Applicant: LG Energy Solution, Ltd., Seoul 07335 (KR)
(72) Inventor: CHO, Woohyung, Daejeon 34122 (KR); PARK, Sungbin, Daejeon 34122 (KR); KWON, Soonho, Daejeon 34122 (KR); YOO, Suyeon, Daejeon 34122 (KR); KIM, Mingyu, Daejeon 34122 (KR)
(74) Representative: Plasseraud IP
(86) International application number: PCT/KR2023/016998
(87) International publication number: WO 2024/096477

(57) **Abstract**

The present disclosure relates to a lithium secondary battery structure that suppresses heat generation or ignition, thereby exhibiting improved output characteristics while having excellent safety. The lithium secondary battery structure comprises a first electrode including a first conductive current collector having an active material layer formed on at least one surface; a second electrode including a second conductive current collector having an active material layer formed on at least one surface; and a plurality of battery units including a separator formed between active material layers of the first and second electrodes facing each other is provided. The first or second conductive current collector is a metal current collector, or a composite conductive current collector having a metal layer formed on a polymer substrate for each battery unit. The metal current collector to composite conductive current collector ratio within the total battery structure is in a range of 5:1 to 1:5.

## Description

### [TECHNICAL FIELD]

The present disclosure relates to a lithium secondary battery structure that suppresses heat generation or ignition, thereby exhibiting improved output characteristics while having excellent safety.

### [BACKGROUND]

Recently, as the development of a technology and the demand for a mobile device have increased, the demand for a chargeable/dischargeable secondary battery as an energy source has rapidly increased, and various research into secondary batteries capable of meeting various needs has been carried out accordingly. In addition, the secondary battery has attracted considerable attention as a power source for an electric vehicle (EV), a hybrid electric vehicle (HEV), a plug-in hybrid electric vehicle (Plug-in HEV) and the like, which have been developed to solve air pollution and the like, caused by existing gasoline and diesel vehicles using fossil fuel.

Therefore, electric vehicles(EV) that can be driven by using only a secondary battery and hybrid electric vehicles(HEV) which use jointly a secondary battery and a conventional engine have been developed, some of which have been commercially used. A nickel-metal hydride (Ni-MH) secondary battery has been mainly used as the power source for EV, HEV, and the like. In recent years, however, research has actively proceeded on utilization of a lithium secondary battery having high energy density, high discharge voltage, and output stability, some of which have been commercially used

Such a lithium secondary battery is manufactured by applying an electrode slurry containing an electrode active material to an electrode current collector, drying and rolling it to produce an electrode, and then embedding an electrode assembly, in which a separator is interposed between the electrodes, in a battery case together with an electrolyte solution.

Meanwhile, copper or aluminum is generally used as a material for electrode current collectors, however, aluminum, which is used as a conventional positive electrode current collector, has the problem of showing a dangerous mode that comes into contact with a negative electrode active material in the event of a short circuit, thereby leading to ignition.

To solve this problem, an attempt was made to replace the conventional aluminum positive electrode current collector with a current collector coated with aluminum on a PET substrate. In this case, however, the resistance of the current collector itself increases and the short-circuit resistance increases even when it comes into contact with the negative electrode active material, which is expected to reduce the possibility of ignition during safety verification, while the resistance of the entire cell increases, which causes a problem that output characteristics are deteriorated.

Therefore, there is a continued need for the development of technology that applies an organic/metal composite as a metal current collector, thereby capable of improving output characteristics or the like while achieving high stability.

### [DETAILED DESCRIPTION OF THE INVENTION]

### [Technical Problem]

It is an object of the present disclosure to provide a lithium secondary battery structure that suppresses heat generation or ignition due to external impact, etc., thereby exhibiting improved output characteristics while having excellent safety.

It is another object of the present disclosure to provide a lithium secondary battery structure that includes a metal current collector and a composite conductive current collector, thereby exhibiting excellent stability and improved life time characteristics.

### [Technical Solution]

Hereinafter, a lithium secondary battery structure, and the like according to specific embodiments of the disclosure will be described.

Terms or words used in the specification and the appended claims should not be construed as limited to ordinary or dictionary meanings, and the present disclosure should be construed with meanings and concepts that are consistent with the technical idea of the present disclosure based on the principle that the inventors may appropriately define concepts of the terms to appropriately describe their own invention in the best way.

The terms used herein are provided to describe exemplary embodiments but not to limit the inventive concept. The singular forms include plural forms unless the context clearly indicates otherwise.

It should be understood that the terms "comprise," "include", "have", etc. are used herein to specify the presence of stated features, integers, steps, components or combinations thereof, but do not preclude the presence or addition of one or more other features, integers, steps, components, or combinations thereof.

According to one embodiment of the disclosure, there is provided a lithium secondary battery structure comprising at least one first electrode including a first conductive current collector having an active material layer formed on at least one surface; at least one second electrode including a second conductive current collector having an active material layer formed on at least one surface; and a plurality of battery units each including a separator formed between active material layers of respective first and second electrodes facing each other, wherein the first conductive current collector of each of the at least one first electrodes is either a metal current collector or a composite conductive current collector having a metal layer formed on a polymer substrate for each battery unit, wherein the second conductive current collector of each of the at least one second electrodes is either a metal current collector or a composite conductive current collector having at least one metal layer formed on a polymer substrate for each battery unit, and wherein a ratio of metal current collectors to composite conductive current collectors in the total battery structure is in a range from 5:1 to 1:5.

The present inventors have continued research and experiments to develop a secondary battery that achieves high stability and at the same time has improved output characteristics, etc., unlike a conventional secondary battery that applies a composite current collector coated with aluminum on an aluminum foil positive electrode current collector or a polymer such as PET.

From the results of these continuous research, it has been found that when a metal current collector and a composite conductive current collector coated with a metal layer on a polymer are combined as the current collector of each battery unit in a battery structure including a plurality of battery units, excellent performance can be obtained. **In** particular, it has been found that by adjusting the ratio of a metal current collectors to a composite conductive current collector used in the entire cell structure, it is possible to simultaneously improve stability and cell performance.

Aluminum, which is used as a conventional positive electrode current collector, has low resistance characteristics, but when a short circuit occurs, it comes into contact with the negative electrode active material and leads to ignition, which results in low stability. **In** the case of a composite conductive current collector in which a metal layer is coated onto a polymer, the resistance of the current collector itself becomes larger, and the short-circuit resistance become larger even when it comes into contact with the negative electrode active material, so it has excellent stability, but the resistance of the entire cell is increased and the output characteristics are deteriorated, thereby having a trade-off relationship between stability characteristics and output characteristics. Therefore, by adjusting the ratio of the metal current collector and the composite conductive current collector, or by regularly and alternately arranging the metal current collector and the composite conductive current collector, both stability characteristics and output characteristics can be obtained at a good level.

Such excellent output characteristics can be supported through the measurement results of initial resistance of Experimental Examples described hereinafter, the excellent stability can be supported through low ignition rate and explosion rate in the impact test of Experimental Examples described hereinafter, and the life time characteristics can be confirmed, for example, from the excellent capacity retention of 80% or more, or 90% or more after 300 cycles, in the evaluation results of life time characteristics according to the progress of charge and discharge at room temperature in Examples described hereinafter.

Meanwhile, in one embodiment of the present disclosure, the metal current collector supports the active material layers 120 and 220, and are not particularly limited so long as they have conductivity without causing chemical changes in the corresponding battery. For example, the metal current collector may be made of copper, stainless steel, aluminum, nickel, titanium, palladium, fired carbon, copper or stainless steel that is surface-treated with one of carbon, nickel, titanium, silver, or the like, an aluminum-cadmium alloy, or the like.

Further, the metal current collectors 110 and 210 may form a fine protrusion and depression on the surface thereof and may enhance bonding strength with the active material layer. Thereby, the metal current collector may be used in any of various forms including a film, a sheet, a foil, a mesh, a net, a porous body, a foaming body, and a non-woven fabric structure. For example, the metal current collector may be an aluminum foil.

In one embodiment, the composite conductive current collector 110' may have a structure in which a metal layer 112 is formed on a polymer substrate 111. Specifically, the composite conductive current collector 110' has a three-layer laminated structure, wherein the metal layers 112 may be formed on both surfaces of the polymer substrate 111, respectively.

In the case of a positive electrode current collector made of a metal material, flexibility is not excellent due to the metal, and it is difficult to achieve lightweight property of the battery, but it is possible to ensure flexibility and lightweight property of the battery due to the polymer substrate 111, and also to impart the same conductivity as a current collector made of a single metal material through the metal layer 112, thereby preventing a decrease in battery performance.

In one embodiment, the polymer substrate 111 may be a polyester-based resin substrate. For example, the polyester-based resin may include resins such as polyethylene terephthalate(PET), polytrimethylene terephthalate(PTT), polybutylene terephthalate(PBT) or polyethylene naphthalate(PEN). Preferably, the polymer substrate may be a polyethylene terephthalate(PET) substrate.

Further, in one embodiment, the metal layer 112 may be a metal layer such as stainless steel, aluminum, copper, nickel, or titanium, or copper or stainless steel that is surface-treated with one of carbon, nickel, titanium, silver, or the like. Further, the metal layer may form a fine protrusion and depression on the surface thereof, and may be used in any of various forms including a film, a sheet, a foil, a mesh, a net, a porous body, a foaming body, and a non-woven fabric structure. For example, the metal layer may be an aluminum layer.

Meanwhile, by adjusting the ratio of the thickness of the polymer substrate 111 and the metal layer 112 included in the composite conductive current collector 110', it is possible to improve the processability as well as the electrochemical performance and stability of the cell. For example, in the composite conductive current collector 110', the ratio of the total thickness of the polymer substrate : the total thickness of the metal layer may be 1:2 to 5:1. However, if the thickness ratio of the polymer substrate is too high, the resistance may be increased and the cell performance may be deteriorated, and if the thickness ratio of the metal layer is high, it may result in a structure similar to a metal foil, and there may be no difference in terms of stability.

In the lithium secondary battery structure according to one embodiment, the first or second conductive current collectors 110 and 210 may be a metal current collector, or a composite conductive current collector 110' in which a metal layer 112 is formed on a polymer substrate 111 for each battery unit. At this time, the first or second conductive current collectors 110 and 210 in at least one battery unit may be a composite conductive current collector 110'.

In one embodiment, the first electrode 100 is a positive electrode, and the first conductive current collector 110 may be the metal current collector, or the composite conductive current collector 110' for each battery unit. At this time, the first conductive current collector 110 may have a thickness ranging from 6 µm to 20 µm. If the thickness range is too large or small, or if the thickness is less than 6 µm, the R2R coating process may be impossible, and if the thickness is greater than 20 µm, the loss in energy density per cell volume can be significant.

In one embodiment, the first conductive current collector 110 is the metal current collector, or the composite conductive current collector 110' for each battery unit A, B, and the metal current collector and the composite conductive current collector may be alternately and regularly arranged in accordance with the stacking order of the first electrode 100.

Specifically, the metal current collector and the composite conductive current collector 110' may be configured such that in accordance with the stacking order of the first electrode 100, one composite conductive current collector 110' is repeatedly arranged per 1 to 3 metal current collectors, or one metal current collector is repeatedly arranged per 1 to 3 composite conductive current collectors.

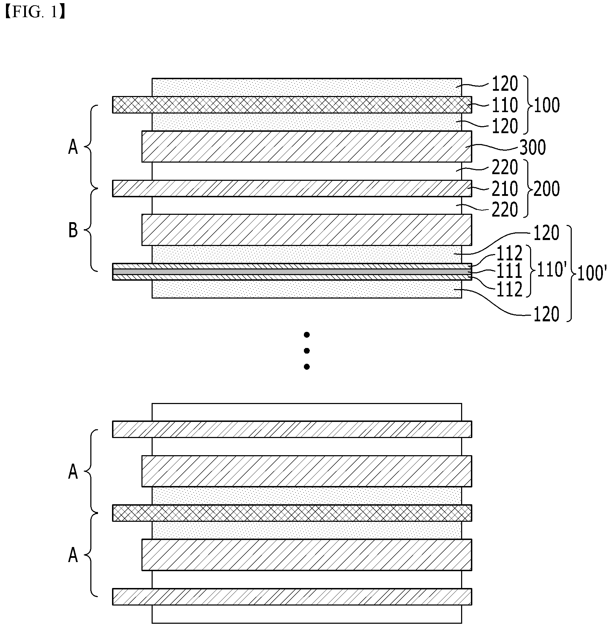

For example, if the battery unit including a positive electrode to which a metal current collector is applied is represented as A, and the battery unit including a positive electrode to which a composite conductive current collector is applied is represented as B, it can be repeatedly arranged in the order of ABAB···ABAB, ABBABB···ABBABB, ABBBABBB···ABBBABBB, AABAAB···AABAAB, or AAAB···AAAB in accordance with the stacking order of each battery unit. For reference, FIG. 1 is a schematic cross-sectional view of one embodiment of a lithium secondary battery structure in which a battery unit A including positive and negative electrodes to which a metal current collector is applied, a battery unit B including a positive electrode to which a composite conductive current collector is applied and a negative electrode to which a metal current collector is applied, and a battery unit A including positive and negative electrodes to which a metal current collector is applied are alternately arranged.

In one embodiment, when the metal current collector : the composite conductive current collector is included in a ratio of the number of 5:1 to 1:5 within the overall battery structure, it is possible to improve excellent output characteristics and life time characteristics while ensuring a high level of stability. In particular, when the metal current collector and the composite conductive current collector are included in a ration of the number of 3:1 to 1:3, optimal results can be expected. However, if the ratio is too large or too small, stability characteristics or output characteristics may be deteriorated.

In the electrode of one embodiment, the active material layers 120 and 220 are formed on both surfaces of the first and second conductive current collectors 110 and 210, and the first and second electrodes 100 and 200 may be alternately stacked with a separator 300 interposed therebetween. For example, the active material layers 120 and 220 including an active material, a conductive material and a binder may be formed on the first or second conductive current collectors 110 and 210.

In such active material layers 120 and 220, if the active material is a positive electrode active material, the active material is not particularly limited as long as it is a material capable of reversibly intercalating and de-intercalating lithium ions, and examples thereof include a lithium metal composite oxide containing at least one metal element selected from the group consisting of Co, Mn, Ni, W, Cu, Fe, V, Cr, Ti, Zr, Zn, Al, In, Ta, Y, La, Sr, Ga, Sc, Gd, Sm, Ca, Ce, Nb, Mg and Mo.

More specifically, a compound represented by any one of the following formulas can be used as the positive electrode active material. LiₐA_{1-b}R_{b}D₂(wherein, 0.90 ≤ a ≤ 1.8 and 0 ≤ b ≤ 0.5); LiₐE_{1-b}R_{b}O_{2-c}D_{c}(wherein, 0.90 ≤ a ≤ 1.8, 0 ≤ b ≤ 0.5, and 0 ≤ c ≤ 0.05); LiE_{2-b}R_{b}O_{4-c}D_{c}(wherein, 0 ≤ b ≤ 0.5, 0 ≤ c ≤ 0.05); LiₐNi_{1-b-c}Co_{b}R_{c}D_{α}(wherein, 0.90 ≤ a ≤ 1.8, 0 ≤ b ≤ 0.5, 0 ≤ c ≤ 0.05 and 0 < α ≤ 2); LiₐNi_{1-b-c}Co_{b}R_{c}O_{2-α}Z_{α}(wherein, 0.90 ≤ a ≤ 1.8, 0 ≤ b ≤ 0.5, 0 ≤ c ≤ 0.05 and 0 < α < 2); LiₐNi_{1-b-c}Co_{b}R_{c}O_{2-α}Z₂(wherein, 0.90 ≤ a ≤ 1.8, 0 ≤ b ≤ 0.5, 0 ≤ c ≤ 0.05 and 0 < α < 2); LiₐNi_{1-b-c}Mn_{b}R_{c}D_{α}(wherein, 0.90 ≤ a ≤ 1.8, 0 ≤ b ≤ 0.5, 0 ≤ c ≤ 0.05 and 0 ≤ α ≤ 2); LiₐNi_{1-b-c}Mn_{b}R_{c}O_{2-α}Z_{α}(wherein, 0.90 ≤ a ≤ 1.8, 0 ≤ b ≤ 0.5, 0 ≤ c ≤ 0.05 and 0 < α < 2); LiₐNi_{1-b-c}Mn_{b}R_{c}O_{2-α}Z₂(wherein, 0.90 ≤ a ≤ 1.8, 0 ≤ b ≤ 0.5, 0 ≤ c ≤ 0.05 and 0 < α < 2); LiₐNi_{b}E_{c}G_{d}O₂(wherein, 0.90 ≤ a ≤ 1.8, 0 ≤ b ≤ 0.9, 0 ≤ c ≤ 0.5 and 0.001 ≤ d ≤ 0.1); LiₐNi_{b}Co_{c}Mn_{d}GeO₂(wherein, 0.90 ≤ a ≤ 1.8, 0 ≤ b ≤ 0.9, 0 ≤ c ≤ 0.5, 0 ≤ d ≤0.5 and 0.001 ≤ e ≤ 0.1); LiₐNiG_{b}O₂(wherein, 0.90 ≤ a ≤ 1.8 and 0.001 ≤ b ≤ 0.1); LiₐCoG_{b}O₂(wherein, 0.90 ≤ a ≤ 1.8 and 0.001 ≤ b ≤ 0.1); LiₐMnG_{d}O₂(wherein, 0.90 ≤ a ≤ 1.8 and 0.001 ≤ b ≤ 0.1); LiₐMn₂G_{b}O₄(wherein, 0.90 ≤ a ≤ 1.8 and 0.001 ≤ b ≤ 0.1); QO₂; QS₂; LiQS₂; V₂O₅; LiV₂O₅; LiTO₂; LiNiVO₄; and Li_{(3-f)}J₂(PO₄)₃(0 ≤ f ≤ 2).

In the above formulas, A is Ni, Co, Mn or a combination thereof; R is Al, Ni, Co, Mn, Cr, Fe, Mg, V, or a combination thereof; D is O, F, S, P or a combination thereof; E is Co, Mn or a combination thereof; Z is F, S, P or a combination thereof; G is Al, Cr, Mn, Fe, Mg, La, Ce, V or a combination thereof; Q is Ti, Mo, Mn or a combination thereof; T is Cr, V, Fe, Sc, Y or a combination thereof; and J is V, Cr, Mn, Co, Ni, Cu or a combination thereof.

Further, those having a coating layer on the surface of the above compound can be used, or a mixture of the above compound and a compound having a coating layer can be used. The coating layer may include, as the coating element compound, an oxide of the coating element, a hydroxide of the coating element, an oxyhydroxide of the coating element, an oxycarbonate of the coating element, and a hydroxycarbonate of the coating element. The compounds constituting these coating layers may be amorphous or crystalline compounds. As the coating element included in the coating layer, Mg, Al, Co, K, Na, Ca, Si, Ti, V, Sn, Ge, Ga, B, As, Zr, or a mixture thereof can be used.

Further, the conductive material included in the positive active material layer 120 is used to impart conductivity to the electrode, and the conductive material can be used without limitation as long as it has electronic conductivity without causing chemical changes in the battery to be configured. Examples thereof include natural graphite, artificial graphite, carbon black, carbon fiber, carbon nanotubes, metal powder such as copper, nickel, aluminum and silver, metal fibers, and the like. Further, conductive materials such as polyphenylene derivatives can be used alone or in a mixture of one of more thereof. Additionally, such a conductive material may be the same as or different from the carbon-based conductive material contained in the safety protection layer described above.

The conductive material may be added in an amount of 1 to 50 wt.%, or 2 to 20 wt.%, based on the total weight of the positive active material layer 120. Thereby, it is possible to ensure preferable formation of the positive electrode while imparting excellent electrical characteristics to the positive electrode.

The binder plays a role in making the particles of the positive electrode active material adhere well to each other and further improving the binding properties of the positive electrode active material layer 120. As a typical example thereof, the above-mentioned halogenated polyolefin-based polymer binder, polyvinylalcohol, carboxymethylcellulose, **hydroxypropylcellulose,** diacetylcellulose, polyvinylchloride, carboxylated polyvinylchloride, ethylene oxide-containing polymers, polyvinylpyrrolidone, polyurethane, polyethylene, polypropylene, styrene-butadiene rubbers, acrylated styrene-butadiene rubbers, epoxy resins, nylon, and the like can be used.

The binder may be added in an amount of 1 to 50 wt.%, or 2 to 30 wt.% based on the total weight of the positive electrode active material layer 120. Thereby, it is possible to form a positive electrode having excellent durability without obstructing the electrical characteristics and/or capacity characteristics of the positive electrode.

The above-mentioned positive electrode active material layer 120 can be formed by dissolving or dispersing each component such as the above-mentioned positive electrode active material, conductive material, and binder in a medium such as an organic solvent to form a slurry composition, and then coating and drying the slurry composition on a conductive current collector.

At this time, examples of medium such as the organic solvent include N-methyl-2-pyrrolidone (NMP), methoxy propyl acetate, butyl acetate, glycol acid, butyl ester, butyl glycol, methylalkylpolysiloxane, alkylbenzene, propylene glycol, xylene, monophenyl glycol, or the like, and among them, NMP, etc. can be appropriately used.

However, since the formation process and conditions of the positive electrode active material layer 120 may follow the general positive electrode formation process and conditions, further description thereof will be omitted.

The above-mentioned positive electrode active material layer 120 may be formed to a thickness of, for example, 10 to 300 *µ*m, or 15 to 200 *µ*m, and as a result, may exhibit excellent safety and electrical characteristics during charging and discharging.

Meanwhile, according to another embodiment of the disclosure, individual battery units A and B including a positive electrode 100, a negative electrode 200, and a separator 300 interposed therebetween are provided, and a lithium secondary battery structure can be formed by including a plurality of such battery units.

In the lithium secondary battery, which is a battery unit of the other embodiments, the negative electrode 200 is manufactured by applying, drying, and rolling a negative electrode active material on the negative electrode current collector 210, and optionally, may further include a conductive material and a binder.

The negative electrode active material may include, for example, graphite having a complete layered crystal structure such as natural graphite, soft carbon having a low-crystalline layered crystal structure (graphene structure in which hexagonal honeycomb shaped planes of carbon are arrayed in the form of a layer), hard carbon having a structure in which the low-crystalline structures are mixed with non-crystalline parts, carbon and graphite materials such as artificial graphite, expanded graphite, carbon fiber, hardly graphitizable carbon, carbon black, carbon nanotubes, fullerene, activated carbon; or metal composite oxides such as LiₓFe₂O₃ (0≤x≤1), LiₓWO₂ (0≤x≤1), SnₓMe₁₋ₓMe'_{y}O_{z} (Me: Mn, Fe, Pb, Ge; Me', Al, B, P, Si, Group 1, 2, 3 elements in the periodic table, halogen; 0<x≤1; 1≤y≤3; 1≤z≤8); lithium metal; lithium alloys; silicon, silicon oxide or silicon-based alloys; tin-based alloys; a conductive polymer such as polyacetylene; Li-Co-Ni based materials; titanium oxide; or lithium titanium oxide, etc.

In one embodiment, the negative electrode active material may include both graphite and silicon(Si)-containing particles, the graphite may include at least one of natural graphite with a layered crystal structure and artificial graphite with an isotropic structure, and the silicon(Si)-containing particles are particles containing as a main component silicon(Si) as a metal component, and may include silicon(Si) particles, silicon oxide particles, or a mixture of the silicon(Si) particles and silicon oxide particles.

In addition, the conductive material and binder that can be used together with the negative electrode active material may be the same components as the conductive material and binder included in the positive electrode active material layer 120.

Further, the negative electrode active material layer 220 containing the negative electrode active material may have an average thickness of 100 *µ*m to 200 *µ*m, and specifically, it may have an average thickness of 100 *µ*m to 180 *µ*m, 100 *µ*m to 150 *µ*m, 120 *µ*m to 200 *µ*m, 140 *µ*m to 200 *µ*m, or 140 *µ*m to 160 *µ*m.

Furthermore, the negative electrode current collector 210 is not particularly limited as long as it has high conductivity without causing chemical changes in the battery. For example, copper, stainless steel, nickel, titanium, fired carbon, etc. can be used, and in the case of copper or stainless steel, materials surface-treated with carbon, nickel, titanium, silver, etc. may be used.

In addition, similar to the positive electrode current collector 110, the negative electrode current collector 210 may have fine protrusions and depressions formed on a surface thereof to enhance adherence of a negative electrode active material layer 220, and may be formed in various forms such as a film, a sheet, a foil, a net, a porous body, a foaming body, and a non-woven fabric structure. Moreover, the average thickness of the negative electrode current collector 210 can be appropriately applied in the range of 3~500 *µ*m in consideration of the conductivity and total thickness of the negative electrode to be produced.

Further, the separator 300 is interposed between the positive electrode 100 and the negative electrode 200, and a thin insulating film having high ion permeability and mechanical strength is used. The separator 300 is not particularly limited as long as it is commonly used in this field. Specifically, chemically resistant and hydrophobic polypropylene; glass fiber; or sheets or non-woven fabrics made of polyethylene, etc. can be used. In some cases, a composite separator can be used in which inorganic particles/organic particles are coated by an organic binder polymer onto a porous polymer substrate such as a sheet or non-woven fabric. When a solid electrolyte such as a polymer is used as the electrolyte, the solid electrolyte can also serve as a separator. In addition, the separator may have an average pore diameter of 0.01 ~ 10 *µ*m, and an average thickness of 5 ~ 300 *µ*m.

The battery unit of the other embodiments described above may further include an electrolyte, wherein such an electrolyte may be an electrolyte solution containing a non-aqueous organic solvent and a lithium salt, or an electrolyte membrane containing an organic or inorganic solid electrolyte, and these may be mixed and used together. However, the types of electrolytes that can be used are well known to those skilled in the art, and are not particularly limited in batteries of other embodiments, and therefore, further description thereof will be omitted.

### [Advantageous Effects]

As described above, the lithium secondary battery structure of the present disclosure includes a metal current collector and a composite conductive current collector in a certain ratio within the entire battery structure, thereby improving output characteristics and the like while achieving excellent safety of the lithium secondary battery structure.

In addition, the lithium secondary battery structure can exhibit excellent life time characteristics at room temperature.

### [BRIEF DESCRIPTION OF THE DRAWINGS]

FIG. 1 shows a cross-sectional view of a lithium secondary battery structure according to one embodiment of the present disclosure.

### [DETAILED DESCRIPTION OF THE EMBODIMENTS]

Hereinafter, embodiments of the present disclosure will be described in detail so that those skilled in the art can easily carry out them. However, the present disclosure may be modified in various different ways, and is not limited to the embodiments set forth herein.

### Comparative Example 1: Secondary battery structure to which metal current collector is applied

First, a positive electrode active material(LCO): a conductive material (carbon black): a binder(PVdF) were mixed in a mass ratio of 97:1.2:1.8 in N-methylpyrrolidone(NMP) solvent to prepare a positive electrode slurry. This slurry was then coated onto a 10um aluminum foil metal current collector with a determined loading amount, dried, and then rolled to produce a double-sided positive electrode.

Then, as a counter negative electrode, a negative electrode active material (graphite): a conductive material (carbon black): a binder(SBR): CMC were mixed in a mass ratio of 95.35:0.5:3:1.15 to prepare a negative electrode slurry. This slurry was then coated onto a current collector of 8um copper foil with a determined loading amount, dried, and then rolled to produce a negative electrode. A 10µm thick separator coated with SRS on a polyolefin fabric was applied as a separator between the negative electrode and the positive electrode to produce a mono cell (metal current collector).

The produced mono cells were arranged into 24 cells to manufacture a lithium secondary battery structure.

### Comparative Example 2: Secondary battery structure to which composite conductive current collector is applied

First, a positive electrode active material(LCO): a conductive material (carbon black): a binder(PVdF) were mixed in a mass ratio of 97:1.2:1.8 in N-methylpyrrolidone(NMP) solvent to prepare a positive electrode slurry. This slurry was then coated onto a composite conductive current collector with a total thickness of 12um consisting of 1um aluminum/10um PET/1um aluminum with a determined loading amount, dried, and then rolled to produce a double-sided positive electrode.

Then, as a counter negative electrode, a negative electrode active material (graphite): a conductive material (carbon black): a binder(SBR): CMC were mixed in a mass ratio of 95.35:0.5:3:1.15 to prepare a negative electrode slurry. This slurry was then coated onto a current collector of 8um copper foil with a determined loading amount, dried, and then rolled to produce a negative electrode. A 10µm thick separator coated with SRS on a polyolefin fabric was applied as a separator between the negative electrode and the positive electrode to produce a mono cell (composite conductive current collector).

The produced mono cells were arranged into 24 cells to manufacture a lithium secondary battery structure.

### Example 1: Secondary battery structure to which composite conductive current collector was applied (metal: composite = 1:5)

A mono cell (metal current collector, A) produced in the same manner as in Comparative Example 1 and a mono cell (composite conductive current collector, B) produced in the same manner as in Comparative Example 2 were prepared.

The 4 mono cells A and 20 mono cells B were arranged in the order of ABBBBBABBBBB... ABBBBBABBBBB to manufacture a lithium secondary battery structure. At this time, the ratio of the number of metal current collector: composite conductive current collector was set to 1:5.

### Example 2: Secondary battery structure to which composite conductive current collector was applied (metal: composite = 1:3)

A lithium secondary battery structure was manufactured in the same manner as in Example 1, except that 6 mono cells A and 18 mono cells B produced in Example 1 were arranged in the order of ABBBABBB... ABBBABBB. At this time, the ratio of the number of metal current collector: composite conductive current collector was set to 1:3.

### Example 3: Secondary battery structure to which composite conductive current collector was applied (metal: composite = 1:1)

A lithium secondary battery structure was manufactured in the same manner as in Example 1, except that 12 mono cells A and 12 mono cells B produced in Example 1 were arranged in the order of ABAB...ABAB. At this time, the ratio of the number of metal current collector: composite conductive current collector was set to 1:1.

### Example 4: Secondary battery structure to which composite conductive current collector was applied (metal: composite = 3:1)

A lithium secondary battery structure was manufactured in the same manner as in Example 1, except that 18 mono cells A and 6 mono cells B produced in Example 1 were arranged in the order of AAABAAAB... AAABAAAB. At this time, the ratio of the number of metal current collector: composite conductive current collector was set to 3:1.

### Example 5: Secondary battery structure to which composite conductive current collector was applied (metal: composite = 5:1)

A lithium secondary battery structure was manufactured in the same manner as in Example 1, except that 20 mono cells A and 4 mono cells B produced in Example 1 were arranged in the order of AAAAABAAAAAB...AAAAABAAAAAB. At this time, the ratio of the number of metal current collector: composite conductive current collector was set to 5:1.

### Experimental Example 1: Performance evaluation based on the ratio of the number of metal current collector and composite conductive current collector

The following experiment was conducted to evaluate the performance of the lithium secondary battery structures of the Examples and Comparative Examples.

### 1) Measurement of initial resistance

The AC impedance value of the manufactured lithium secondary battery structure was measured at a frequency of 10 kHz, and the results are shown in Table 1 below.

### 2) Evaluation of cycle life performance

The lithium secondary battery structures of the Examples and Comparative Examples were initially charged and discharged (one time) at room temperature. At this time, charging was performed up to SOC50 at constant current (CC) of 1C-rate, and then up to SOC100 at a constant current-constant voltage (CC-CV) of 0.7C-rate, and discharging was performed up to 3.0V at 0.7C-rate. The capacity retention (%) was measured while conducting a total of 300 charge/discharge cycles. At this time, the capacity retention was calculated using Equation 1 below, and the results are shown together in Table 1 below: Capacity retention(%) = (Discharge capacity at 300 charge/discharge cycles/Discharge capacity at 1 charge/discharge) × 100

### 3) Stability test

A cylindrical bar with a 15.8 pie diameter was placed on the lithium secondary battery structure of the Examples and Comparative Examples, and a weight of 9.1 kg was free-fallen at a height of 610 mm to impact the cell, and an impact test was performed. A cell was judged to be a pass if it satisfied the NF(no fire) and NE(no explosion) conditions. The number of passes was measured based on the total number of tests, and the pass rate (%) was evaluated therefrom. The evaluation results are shown in Table 1 below.

**[Table 1]**

| | Comparative Example 1 | Comparative Example 2 | Example 1 | Example 2 | Example 3 | Example 4 | Example 5 |
|---|---|---|---|---|---|---|---|
| Ratio of metal current collector: composite conductive current collector | 10:0 | 0:10 | 1:5 | 1:3 | 1:1 | 3:1 | 5:1 |
| Initial resistance (mOhm) | 3.1 | 25.1 | 20.1 | 15.3 | 15.2 | 14.2 | 12.5 |
| Battery life time (%, 300 cycle @ RT) | 93.2 | 80.4 | 89.2 | 92.7 | 93.5 | 94.6 | 95.6 |
| Safety test (%, Pass) | 40 | 100 | 100 | 100 | 100 | 90 | 80 |

Referring to Table 1, it was confirmed that the lithium secondary battery structures of Examples 1 to 5 have low initial resistance values and exhibit high capacity retention and excellent life time characteristics even after 300 charge/discharge cycles. In particular, it was confirmed that Examples 2 to 4, in which the metal current collector: composite conductive current collector ratio was 1:3 to 3:1, exhibit more excellent properties.

In contrast, the lithium secondary battery structure to which the single metal current collector of Comparative Example 1 was applied exhibits poor performance in stability characteristics, and the lithium secondary battery structure to which the composite conductive current collector of Comparative Example 2 was applied exhibits poor performance in initial resistance value and life time characteristics.

### Experimental Example 2: Performance evaluation based on the thickness ratio of composite conductive current collector

First, a positive electrode active material(LCO): a conductive material (carbon black): a binder (PVdF) were mixed in a mass ratio of 97:1.2:1.8 in N-methylpyrrolidone (NMP) solvent to prepare a positive electrode slurry. This slurry was then coated with a determined loading amount on a composite conductive current collector with different thickness ratios of the polymer substrate (PET) and metal layer (aluminum) as shown in Table 2 below, dried, and then rolled to produce a double-sided positive electrode.

Then, as a counter negative electrode, a negative electrode active material (graphite): a conductive material (carbon black): a binder (SBR): CMC were mixed in a mass ratio of 95.35:0.5:3:1.15 to prepare a negative electrode slurry. This slurry was then coated onto a current collector of 8um copper foil with a determined loading amount, dried, and then rolled to produce a negative electrode.

A 10µm thick separator coated with SRS on a polyolefin fabric was applied as a separator between the negative electrode and the positive electrode to manufacture mono cell samples of Examples 6~7 and Comparative Examples 3~5. The following experiments were carried out to evaluate the performance of the prepared samples.

### 1) Evaluation of processability

The mono cell samples prepared above were wound onto a circular pillar with a diameter of 80 mm to measure whether a short circuit (or crack) occurred on the electrode surface, and the results are shown in Table 2 below.

### 2) Evaluation of 2C output

The samples of Examples 6~7 and Comparative Examples 3~5, which were prepared with different thickness ratios of the polymer substrate (PET) and the metal layer (aluminum) of the composite conductive current collector, were discharged once under 2C-rate current conditions, and then 0.1C discharge capacity vs. capacity ratio was calculated. The results are shown in Table 2 below.

### 3) Nail penetration test

The samples of Example 6~7 and Comparative Example 3~5 prepared above were evaluated for the ignition when a metal body with a diameter of 3 mm was lowered at a speed of 80 mm/sec and penetrated through the cell in the same manner as in the PV8450 certification conditions. The number of times the ignition occurred was measured based on the total number of tests, and the ignition rate (%) was evaluated therefrom. The results of this evaluation are shown in Table 2 below.

**[Table 2]**

| Metal layer/polymer substrate/metal layer | Comparative Example 3 0.5um/11um/0.5 um | Example 6 1um/10um/1um | Example 7 4um/4um/4um | Comparative Example 4 5um/2um/5um | Comparative Example 5 6um/Oum/6um |
|---|---|---|---|---|---|
| Total polymer thickness :total metal layer thickness | 11:1 | 5:1 | 1:2 | 1:5 | 0:1 |
| Processability | Disconnection occurred | Excellent | Excellent | Excellent | Excellent |
| 2C output evaluation (relative to %,0.1C discharge capacity) | 61.2 | 90.1 | 92.4 | 94.4 | 96.9 |
| Nail penetration test | 100% | 100% | 90% | 20% | 20% |

Referring to Table 2, it was confirmed that Examples 6 and 7, in which the ratio of the total thickness of the polymer substrate : the total thickness of the metal layer was in the range of 1:2 to 5:1 exhibit excellent processability, output characteristics and stability.

In contrast, it was found that in the case of Comparative Example 3, in which the thickness ratio of the PET polymer substrate was high, not only disconnection occurs, but also cell performance is deteriorated due to high resistance. On the other hand, it could be confirmed that in the case of Comparative Example 4, in which the thickness ratio of the aluminum metal layer was high, the output characteristics are excellent, but there is no significant difference in terms of stability from Comparative Example 5 consisting only of the aluminum metal layer.

### [Description of Reference Numerals]

100: first electrode, positive electrode
100': first electrode to which composite conductive collector is applied, positive electrode to which composite conductive collector is applied
110: first conductive collector, positive electrode conductive collector
110': composite conductive collector
111: polymer substrate
112: metal layer
120: positive electrode active material layer
200: second electrode, negative electrode
210: second conductive collector, negative electrode conductive collector
220: negative electrode active material layer
300: separator

## Claims

1. A lithium secondary battery structure comprising:
at least one first electrode including a first conductive current collector having an active material layer formed on at least one surface;
at least one second electrode including a second conductive current collector having an active material layer formed on at least one surface; and
a plurality of battery units each including a separator formed between active material layers of respective first and second electrodes facing each other,
wherein the first conductive current collector of each of the at least one first electrodes is either a metal current collector or a composite conductive current collector having a metal layer formed on a polymer substrate for each battery unit,
wherein the second conductive current collector of each of the at least one second electrodes is either a metal current collector or a composite conductive current collector having at least one metal layer formed on a polymer substrate for each battery unit, and
wherein a ratio of metal current collectors to composite conductive current collectors in the total battery structure is in a range from 5:1 to 1:5.

2. The lithium secondary battery structure according to claim 1, wherein the ratio of metal current collectors to composite conductive current collectors in the total battery structure is in the range from 3:1 to 1:3.

3. The lithium secondary battery structure according to claim 1, wherein each first electrode is a positive electrode, and
each first conductive current collector is either the metal current collector or the composite conductive current collector for each battery unit.

4. The lithium secondary battery structure according to claim 1, wherein the first conductive current collector is either the metal current collector or the composite conductive current collector for each battery unit, and
the metal current collectors and the composite conductive current collectors are regularly and alternately arranged in accordance with the stacking order of the first electrode.

5. The lithium secondary battery structure according to claim 4, wherein the metal current collectors and the composite conductive current collectors are configured such that in accordance with the stacking order of the first electrode, one composite conductive current collector is repeatedly arranged per 1 to 3 metal current collectors or one metal current collector is repeatedly arranged per 1 to 3 composite conductive current collectors.

6. The lithium secondary battery structure according to claim 1, wherein in the composite conductive current collector, the ratio of a total thickness of the polymer substrate to a total thickness of the at least one metal layer is 1:2 to 5:1.

7. The lithium secondary battery structure according to claim 3, wherein the polymer substrate is a polyester-based resin substrate, and the at least one metal layer is aluminum.

8. The lithium secondary battery structure according to claim 7, wherein the polyester-based resin includes at least one resin selected from the group consisting of polyethylene terephthalate(PET), polytrimethylene terephthalate(PTT), polybutylene terephthalate(PBT), and polyethylene naphthalate(PEN).

9. The lithium secondary battery structure according to claim 1, wherein the first conductive current collector has a thickness ranging from 6 µm to 20 µm.

10. The lithium secondary battery structure according to claim 1, wherein active material layers are formed on both surfaces of the first and second conductive current collectors, and
the at least one first electrode and at least one second electrode are alternately stacked and interposed therebetween by at least one separator.
